# FASCICULE DE BREVET EUROPEEN

(11) **EP 1 289 396 B1**
(45) Date de publication et mention de la délivrance du brevet: **14.07.2004**
(21) Numéro de dépôt: 01945380.2
(22) Date de dépôt: 08.06.2001
(51) Int. Cl.: A47J 37/08

(54) **DISPOSITIF DE RECHAUFFAGE DE PRODUITS ALIMENTAIRES DE TYPE PAINS ET NOTAMMENT DE SANDWICHS DU TYPE PIZZA**
VORRICHTUNG ZUM AUFWÄRMEN VON NAHRUNGSMITTELN INSBESONDERE VON PIZZA
DEVICE FOR WARMING FOOD PRODUCTS SUCH AS BREAD AND IN PARTICULAR PIZZA-TYPE SANDWICHES

(30) Priorité: 09.06.2000 FR 0007413
(43) Date de publication de la demande: 12.03.2003
(73) Titulaire: Gerard Schlienger Investissements, 75011 Paris (FR)
(72) Inventeur: BOUTELOUP, Claude, F-71220 Sivignon (FR); HENRY, René, Henri, F-71220 Sivignon (FR)
(74) Mandataire: Schwartz, Thierry J.
(86) Numéro de dépôt international: PCT/FR2001/001779
(87) Numéro de publication internationale: WO 2001/093735

(56) Documents cités:
- DE-A- 3 517 746
- FR-A- 2 488 504
- US-A- 3 377 943
- US-A- 4 208 441
- US-A- 5 323 692
- US-A- 5 549 040

## Description

L'invention concerne un dispositif de réchauffage de produits alimentaires de type pains et notamment de sandwichs du type pizza.

Certains pains à réchauffer, portions, tartes et gâteaux de pâte alimentaire et notamment les sandwichs du type pizza ou pizza-sandwichs nécessitent d'être réchauffés avant leur consommation. Ce réchauffage peut être effectué dans de petits fours du type salamandre, dans des grilles pains ou par infrarouge, la chaleur étant émise à l'extérieur du produit alimentaire. Néanmoins, un réchauffage correct de l'intérieur du produit nécessite de surchauffer la surface et notamment les pâtes d'enveloppe des pizza sandwichs, ce qui nuit à la préhension et consommation ultérieures du produit avec le risque de se brûler. En outre, le temps de chauffe est relativement important, de l'ordre de quatre à cinq minutes.

On notera également que le chauffage de tels produits dans un four à micro-onde ne convient pas en raison du ramollissement de la pâte.

L'invention vise à remédier à ces inconvénients et propose un dispositif de réchauffage de produits alimentaires de type pains à réchauffer et notamment de pizza sandwichs, caractérisé en ce qu'il comporte au moins une broche chauffante apte à recevoir ledit produit alimentaire par enfoncement à l'intérieur de celui-ci, et au moins un élément chauffant externe apte à chauffer l'extérieur du produit alimentaire.

Il résulte de cette disposition que le dispositif de réchauffage selon l'invention chauffe simultanément l'intérieur et l'extérieur du produit, respectivement par sa broche chauffante agissant directement à l'intérieur du produit, par insertion dans celui-ci, et par au moins son élément chauffant externe agissant à distance proche de sa surface. La durée de réchauffage est ainsi considérablement réduite relativement au réchauffage externe classique et est de l'ordre d'une minute.

Le dispositif comporte avantageusement au moins deux éléments chauffants externes disposés de part et d'autre de la broche.

Les éléments chauffants ont une conformation allongée, s'étendant sensiblement parallèlement à la broche et selon une longueur équivalente ou proche de celle du produit à réchauffer. Cette conformation convient aux produits alimentaires de type sandwich, réchauffant ainsi simultanément l'intérieur et l'extérieur du produit sensiblement sur sa longueur, respectivement de façon centrale et par contact par la broche et sur deux faces opposées du produit par radiation par les éléments chauffants externes.

La broche a avantageusement une extrémité effilée tranchante favorisant l'enfoncement du produit dans celle-ci. De même, son épaisseur est faible présentant une conformation plane allongée à forme de lame à arêtes tranchantes.

Elle est constituée d'un matériau thermoconducteur compatible avec la matière alimentaire des produits à réchauffer, par exemple en aluminium alimentaire ou en "inox".

Elle peut être revêtue d'un matériau anti-adhérent aux matières alimentaires, de type "téflon" par exemple.

Les éléments chauffants externes peuvent être de type à résistance chauffante ou élément radiant infrarouge, pourvu d'une plaque déflectrice associée diffusant la chaleur vers le produit.

Le dispositif est avantageusement équipé d'un élément éjecteur du produit actionné en fin de réchauffage, de façon manuelle ou automatique, et assurant l'extraction du produit hors de la broche et donc du dispositif.

Cet élément éjecteur peut être associé à un élément racleur de la broche agissant à l'extraction du produit, l'ensemble étant constitué d'une plaque de fond support du produit, mobile dans la direction de la broche. Cette plaque est pourvue d'une fente de conformation sensiblement celle de la section transversale de la broche, apte à racler la broche lors du mouvement d'extraction du produit.

L'amplitude des températures de chauffe, respectivement de la broche et des éléments chauffants externes, sont conjuguées pour réchauffer davantage l'intérieur du produit que l'extérieur.

En outre, la durée de chauffage est prévue pour obtenir à la fin de l'opération une chaleur d'environ 50°C à l'intérieur du produit et d'environ 40°C en surface, de façon à permettre sa préhension manuelle et consommation simultanée immédiatement après le réchauffage.

L'invention est illustrée ci-après à l'aide d'exemples de réalisation et en référence aux dessins annexés, sur lesquels :

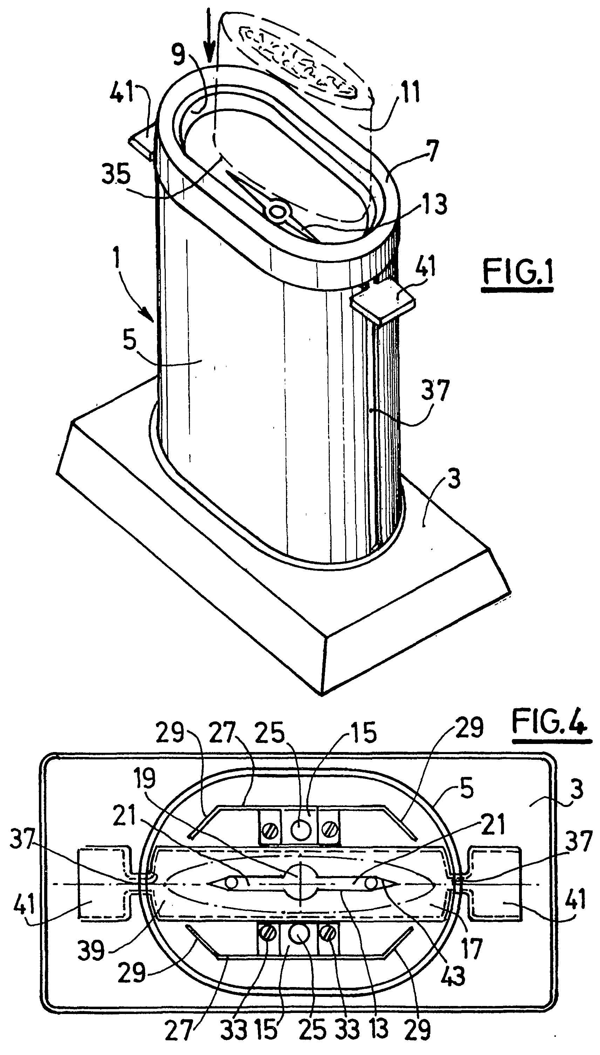

- La figure 1 est une vue en perspective d'un dispositif de réchauffage selon l'invention,
- La figure 2 est une vue en coupe médiane longitudinale dans le sens de la largeur du dispositif,

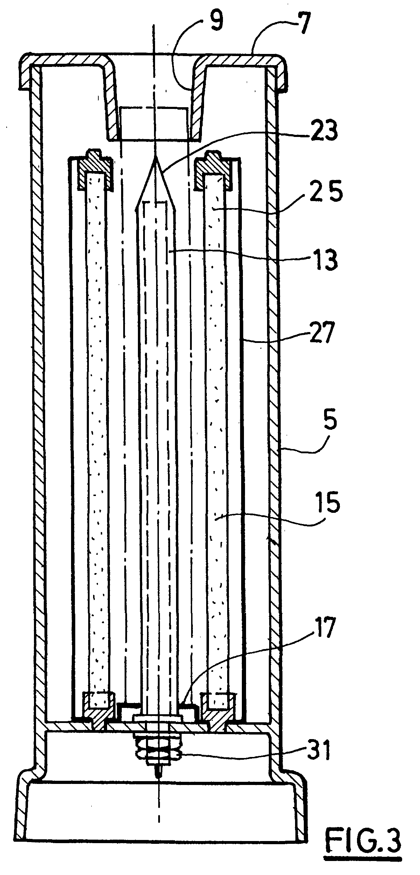

- La figure 3 est une vue analogue à la précédente, à 90° de celle-ci,
- La figure 4 est une vue de dessus du dispositif, le couvercle supérieur étant ôté, et
- La figure 5 est une vue schématique d'une variante de réalisation de l'invention appliquée à un distributeur automatique.

Comme représenté sur les dessins, le dispositif de réchauffage 1 selon l'invention a une conformation cylindrique verticale, comportant un socle support inférieur 3, un corps cylindrique vertical 5 de section transversale oblongue, et un couvercle supérieur 7. L'ensemble comporte une symétrie par rapport à un plan transversal vertical médian.

Le couvercle supérieur 7 est pourvu d'une ouverture oblongue supérieure 9, de profil de bord sensiblement parallèle à celle de la section du corps 5, et à travers laquelle une pizza sandwich 11, représentée partiellement, est introduite selon flèche. Une telle pizza sandwich 11 présente une conformation à forme de poche rectangulaire, relativement plane et de format allongé, par exemple d'environ 7 cm x 20 cm et 10 mm d'épaisseur.

Il est à noter que l'ouverture 9 du couvercle 7 a un format géométrique équivalent à celui de la pizza-sandwich à introduire, de dimensions légèrement supérieures à celle-ci, servant ainsi de guide à son enfoncement.

Le dispositif comporte en outre à l'intérieur du corps 5 une broche chauffante centrale 13 parallèle au corps 5, deux éléments chauffants dits externes 15 disposés de part et d'autre de la broche, parallèlement à celle-ci et à faible distance de celle-ci, et un élément éjecteur racleur 17.

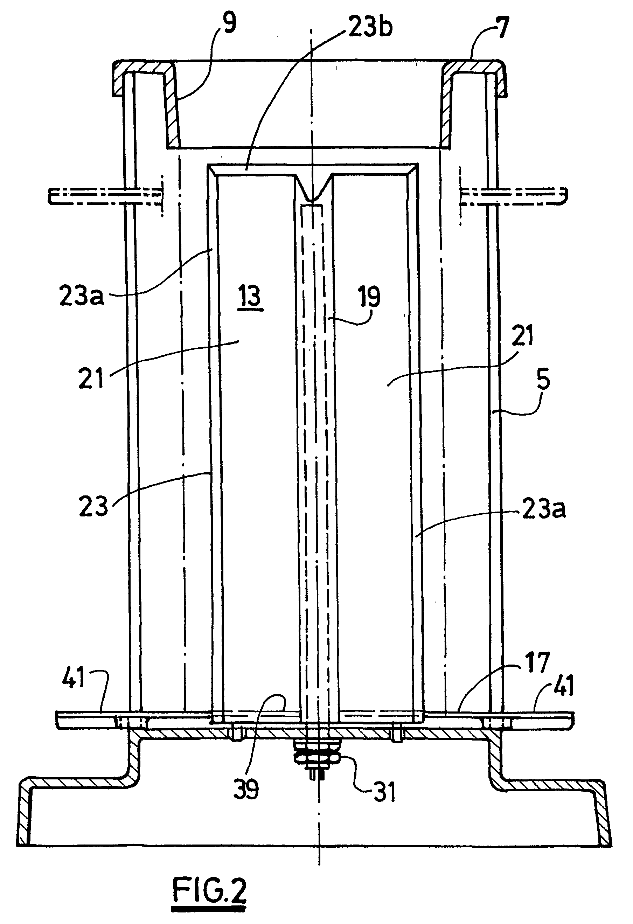

La broche 13 est de conformation allongée plane régulière, de longueur et largeur légèrement inférieures, respectivement, à celles du produit, par exemple d'un format rectangulaire d'environ 18 cm x 5 cm. Elle comporte une cartouche cylindrique chauffante médiane 19 et deux ailes opposées 21 (coplanaires) fixées de part et d'autre de la cartouche 19. La cartouche 19 comporte une résistance électrique chauffante interne (représentée en trait interrompu sur la figure 2) s'étendant sur sa longueur. Elle fait légèrement saillie du plan de surface des ailes opposées 21, par son profil cyclindrique dont la section a un diamètre de 6 mm environ, l'épaisseur des ailes 21 étant d'environ 2 mm.

La broche 13 est en outre pourvue sur sa périphérie d'une arête tranchante 23, à savoir de deux bords tranchants latéraux 23a droits et verticaux et d'un bord supérieur tranchant 23b, droit et horizontal. Elle est constituée en aluminium alimentaire à surface traitée anti-adhérente.

Les éléments chauffants externes 15 sont disposés verticalement, de part et d'autre du plan de la broche 13, et avec symétrie relativement à ce plan. Leur longueur est équivalente à celle de la broche. Ils sont constitués chacun d'une résistance chauffante hélicoïdale centrale 25 et d'une plaque déflectrice 27 arrière à bords inclinés 29 tournés vers l'intérieur, cette plaque diffusant la chaleur de la résistance vers la pizza sandwich.

La broche 13 et les éléments chauffants externes 15 sont fixés par leur base au socle 3 au moyen de vis, respectivement en 31 et en 33.

L'élément éjecteur racleur 17 reçoit l'extrémité 35 de la pizza sandwich que l'on enfonce dans la broche 13 par l'ouverture 9. Il est monté coulissant verticalement dans le corps 5, par deux rainures verticales 37 formées à l'opposé l'une de l'autre verticalement sur les extrémités arrondies du corps. Il comporte essentiellement une plaque de fond horizontale 39 de format rectangulaire et deux pattes extérieures 41 manoeuvrables manuellement et par lesquelles il peut être translaté vers le haut en vue de l'extraction du produit hors du dispositif, une fois réchauffé. Le format de la plaque 39 est tel qu'il permet de passer entre les éléments chauffants externes 15 et donc sa largeur est légèrement inférieure à la distance entre les éléments chauffants 15. Sa longueur est légèrement inférieure à la largeur du corps 5.

Cette plaque de fond 39 est pourvue d'une fente 43 au niveau central, conformée à faible jeu près à la section de la broche 13. Cette fente a pour fonction de racler la broche lors de la translation vers le haut de l'éjecteur, afin de lui ôter toute matière alimentaire éventuellement adhérente.

La durée de réchauffage du produit dépend de la chaleur de la broche, environ 150°C en moyenne, et de celle des éléments chauffants externes. Elle est d'environ une minute, étant signalée par une sonnerie actionnée sous la commande d'une horloge dès que l'opération de réchauffage est terminée.

Le fonctionnement du dispositif est donc très simple. Il s'agit d'introduire l'extrémité 35 du produit, type sandwich ou pain, dans l'ouverture 9 du dispositif et de l'enfoncer verticalement (selon flèche) avec pénétration dans la broche 13 sur une longueur équivalente à la hauteur du corps 5 et jusqu'en butée, sensiblement au niveau de la base du corps où l'éjecteur 17 est à fond de course inférieure. A partir de ce moment et sous la commande de ladite horloge, le chauffage de la broche et des éléments chauffants externes est enclenché. A la fin de la durée de chauffage prévue, environ une minute, la sonnerie est actionnée et il s'agit alors de relever l'éjecteur en l'entraînant vers le haut au moyen de ses pattes externes, pour extraire le produit de la broche et donc du dispositif. Simultanément, la commande de chauffage est interrompue. Naturellement, l'éjection par l'extracteur peut être automatique.

Le produit est à ce moment réchauffé et peut être introduit dans un étui de protection en vue de sa consommation. L'intérieur du produit peut être porté à environ 50°C et l'extérieur à 40°C pour une préhension et consommation simultanée comme un sandwich.

Il est à noter que le corps du dispositif au lieu d'être vertical peut également être tourné dans une autre direction, par exemple horizontalement et que la forme de la broche peut être variable selon le produit.

De plus, le principe de l'invention peut encore être appliqué aux distributeurs réchauffeurs automatiques de produits alimentaires de type pains et notamment de sandwichs du type pizza.

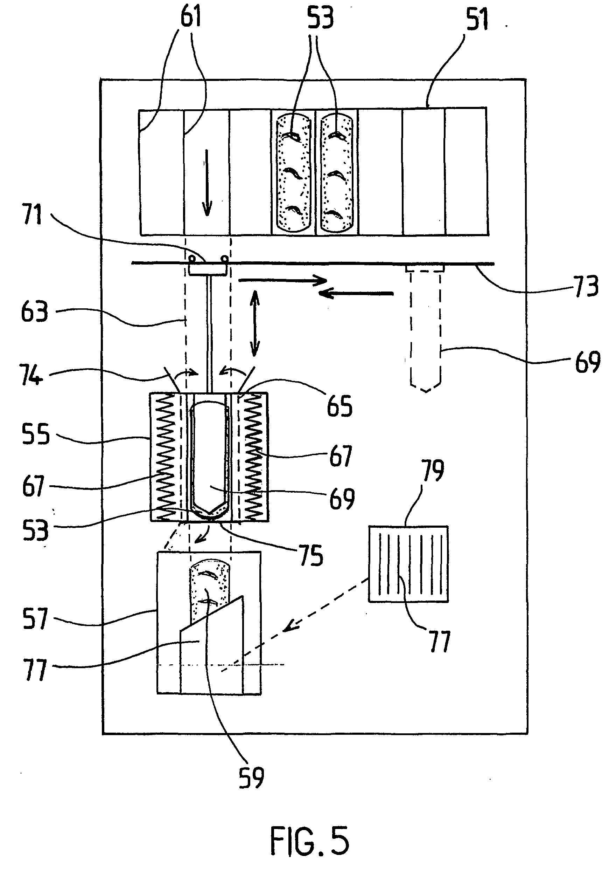

Un distributeur selon l'invention, tel que représenté à la figure 5, comporte un carroussel supérieur 51 de diverses pizza sandwichs 53, maintenues à basse température, environ 3°C, un dispositif de réchauffage 55 en parti médiane et une partie distributrice inférieure 57 du produit chaud conditionné 59.

Le carroussel supérieur 51 comporte dans des casiers verticaux 61 les pizzas sandwichs 53 que l'on peut sélectionner selon diverses garnitures d'ingrédients de pizza. Le carroussel tourne pour libérer la pizza-sandwich sélectionnée dans un guide vertical 63 amenant le produit dans le dispositif de réchauffage 55.

La pizza sandwich tombe ainsi dans l'ouverture du dispositif de réchauffage, jusqu'au fond du panier 65 de réception de celui-ci. Le chauffage est effectué par des résistances chauffantes latérales 67, disposées de chaque côté du panier, et par une broche centrale 69, enfoncée dans la pizza sandwich 53 selon un principe analogue au dispositif de réchauffage décrit ci-dessus.

La broche 69 peut être montée sur un système de chariot 71 déplacé horizontalement sur un rail 73 selon flèche et s'escamotant pour le passage vertical de la pizza sandwich sélectionnée à réchauffer.

Lorsque la pizza sandwich est réchauffée, en un temps réduit, environ 45 secondes à 40-50° C, la broche est remontée, étant raclée par deux volets latéraux 74 rabattus horizontalement sur le dessus de l'ouverture du panier. La pizza sandwich tombe ensuite sous la commande de rotation verticale du volet 75 de fond du panier, dans un étui 77 de conditionnement de la pizza sandwich, lequel est préalablement acheminé selon flèche sur un chemin guide descendant à la partie distributrice 57 depuis un magasin d'étuis adéquat 79.

Par conséquent, au moyen du distributeur automatique décrit ci-dessus, il est possible d'obtenir en un temps réduit un produit chaud sélectionné prêt à être consommé, et préalablement conservé au froid dans de bonnes conditions d'hygiène alimentaire.

## Revendications

1. Dispositif de réchauffage (1) de produits alimentaires de type pains à réchauffer et notamment de pizza sandwichs, **caractérisé en ce qu'**il comporte un corps (5), une partie supérieure ouverte (7) pourvue d'une ouverture (9) et au moins une broche fixe et chauffante par elle-même (13), apte à recevoir ledit produit alimentaire (11), par enfoncement du produit alimentaire sur celle-ci et à l'intérieur du corps (5) à travers l'ouverture (9), et au moins un élément chauffant externe (15) apte à chauffer l'extérieur du produit alimentaire (11), l'amplitude des températures de chauffe, respectivement de la broche (13) et des éléments chauffants externes (15) étant conjuguée pour réchauffer davantage l'intérieur du produit que l'extérieur.

2. Dispositif de réchauffage selon la revendication 1, **caractérisé en ce que** ladite ouverture (9) a un format géométrique équivalent à celui de la pizza-sandwich à introduire, de dimensions légèrement supérieures à celle-ci, servant ainsi de guide à son enfoncement.

3. Dispositif de réchauffage selon la revendication 1 ou 2, **caractérisé en ce qu'**il comporte au moins deux éléments chauffants externes (15) disposés de part et d'autre de la broche (13).

4. Dispositif de réchauffage selon la revendication 3, **caractérisé en ce que** les éléments chauffants (15) ont une conformation allongée, s'étendant sensiblement parallèlement à la broche (13) et selon une longueur équivalente ou proche de celle du produit à réchauffer (11).

5. Dispositif de réchauffage selon l'une des revendications précédentes, **caractérisé en ce que** la broche (13) a une extrémité effilée tranchante (23b) favorisant l'enfoncement du produit (11) dans celle-ci.

6. Dispositif de réchauffage selon l'une des revendications précédentes, **caractérisé en ce que** la broche (13) a une faible épaisseur, présentant une conformation plane allongée à forme de lame à arêtes tranchantes (23).

7. Dispositif de réchauffage selon l'une des revendications précédentes, **caractérisé en ce que** la broche (13) est constituée d'un matériau thermoconducteur compatible avec la matière alimentaire des produits à réchauffer, par exemple en aluminium alimentaire ou en "inox".

8. Dispositif de réchauffage selon l'une des revendications précédentes, **caractérisé en ce que** la broche (13) est revêtue d'un matériau anti-adhérent aux matières alimentaires, de type "téflon" par exemple.

9. Dispositif de réchauffage selon l'une des revendications précédentes, **caractérisé en ce que** les éléments chauffants externes (15) sont de type à résistance chauffante (25) ou élément radiant infrarouge, pourvu d'une plaque déflectrice (27) associée diffusant la chaleur vers le produit.

10. Dispositif de réchauffage selon l'une des revendications précédentes, **caractérisé en ce qu'**il est équipé d'un élément éjecteur (17) du produit actionné en fin de réchauffage, de façon manuelle ou automatique, et assurant l'extraction du produit hors de la broche (13) et donc du dispositif.

11. Dispositif de réchauffage selon la revendication 10, **caractérisé en ce que** l'élément éjecteur (17) est associé à un élément racleur de la broche (13) à l'extraction du produit (11), l'ensemble étant constitué d'une plaque de fond (39) support du produit, mobile dans la direction de la broche et pourvue d'une fente (43) de conformation sensiblement celle de la section transversale de la broche (13), apte à racler la broche (13) lors du déplacement d'extraction du produit.

12. Dispositif de réchauffage selon l'une des revendications précédentes, **caractérisé en ce que** la durée de chauffage est prévue pour obtenir à la fin de l'opération une chaleur d'environ 50°C à l'intérieur du produit (11) et d'environ 40°C en surface, de façon à permettre sa préhension manuelle et consommation simultanée, cette durée étant réduite, de l'ordre d'une minute.

13. Dispositif de distribution automatique de produits alimentaires de type pains et notamment de sandwichs de type pizza, mettant en oeuvre un dispositif de réchauffage tel que défini selon l'une des revendications 1 à 12, **caractérisé en ce qu'**il comporte un magasin (51) de divers produits alimentaires (53) conservés au froid, un dispositif de réchauffage (55) à panier chauffant (65) et broche centrale chaude (69) enfoncée dans le produit et relevée avec râclage, une fois le produit réchauffé à température souhaitée, et un dispositif de conditionnement et de distribution (57) du produit réchauffé.

## Claims

1. Device (1) for reheating food products of the reheated bread type and in particular pizza sandwiches, **characterised in that** it comprises a body (5), an open top part (7) provided with an opening (9) and at least one fixed skewer (13) heated by itself, able to receive the said food product (11) by pressing the food product onto it and inside the body (5) through the opening (9), and at least one external heating element (15) able to heat the outside of the food product (11), the magnitude of the heating temperatures, respectively of the skewer (13) and the external heating elements (15), being combined so as to heat the inside of the product more than the outside.

2. Reheating device according to Claim 1, **characterised in that** the said opening (9) has a geometric format equivalent to that of the pizza sandwich to be introduced, with dimensions slightly greater than the latter, thus serving as a guide for its pressing in.

3. Reheating device according to Claim 1 or 2, **characterised in that** it comprises at least two external heating elements (15) disposed on each side of the skewer (13).

4. Reheating device according to Claim 3, **characterised in that** the heating elements (15) have an elongate conformation, extending substantially parallel to the skewer (13) and over a length equivalent to or close to that of the product to be reheated (11).

5. Reheating device according to one of the preceding claims, **characterised in that** the skewer (13) has a tapered cutting end (23b) assisting the pressing of the product (11) into it.

6. Reheating device according to one of the preceding claims, **characterised in that** the skewer (13) is thin, having an elongate flat conformation in the form of a blade with cutting edges (23).

7. Reheating device according to one of the preceding claims, **characterised in that** the skewer (13) is formed from a heat-conducting material compatible with the food material of the products to be reheated, for example made from food-grade aluminium or stainless steel.

8. Reheating device according to one of the preceding claims, **characterised in that** the skewer (13) is coated with a material preventing the adhesion of food products, of the "Teflon" type for example.

9. Reheating device according to one of the preceding claims, **characterised in that** the external heating elements (15) are of the heating element (25) or infrared radiant element type, provided with an associated deflector plate (27) diffusing the heat towards the product.

10. Reheating device according to one of the preceding claims, **characterised in that** it is equipped with an element (17) for ejecting the product actuated at the end of heating, manually or automatically, and providing the extraction of the product from the skewer (13) and therefore from the device.

11. Reheating device according to Claim 10, **characterised in that** the ejector element (17) is associated with an element scraping the skewer (13) on extraction of the product (11), the whole consisting of a bottom plate (39) supporting the product, able to move in the direction of the skewer and provided with a slot (43) with a conformation substantially that of the transverse section of the skewer (13), able to scrape the skewer (13) during the extraction movement of the product.

12. Reheating device according to one of the preceding claims, **characterised in that** the duration of heating is designed to obtain, at the end of the operation, a heat of approximately 50°C inside the product (11) and approximately 40°C on the surface, so as to allow its simultaneously manual gripping and consumption, this duration being short, around one minute.

13. Device for the automatic dispensing of food products of the bread type and in particular sandwiches of the pizza type, using a reheating device as defined according to one of Claims 1 to 12, **characterised in that** it comprises a magazine (51) for various food products (53) stored cold, a reheating device (55) with a heating basket (65) and a hot central skewer (69) pressed into the product and raised after scraping, once the product is reheated to the required temperature, and a device (57) for packaging and dispensing the reheated product.

## Patentansprüche

1. Aufwärmvorrichtung (1) für Nahrungsmittelprodukte von der Art von Aufbackbroten und insbesondere von Pizzataschen, **dadurch gekennzeichnet, daß** sie einen Körper (5) umfassen, einen offenen oberen Abschnitt (7) mit einer Öffnung (9) und wenigstens einem festen und selbstbeheizten Heizspieß (13), welcher zur Aufnahme des Lebensmittelprodukts (11) geeignet ist, durch Aufschieben des Lebensmittelprodukts auf denselben und in den Körper (5) durch die Öffnung (9) und wenigstens einem zum Erhitzen des Äußeren des Lebensmittelprodukts (11) geeigneten äußeren Heizelement, wobei die Temperaturamplitude des Heizelements bzw. des Heizspießes (13) und den äußeren Heizelementen (15) zum stärkeren Erwärmen des Inneren des Produkts gegenüber dem Äußeren verknüpft sind.

2. Aufwärmvorrichtung nach Anspruch 1, **dadurch gekennzeichnet, daß** die Öffnung (9) eine der einzuführenden Pizzatasche entsprechende geometrische Form besitzt, wobei deren Dimensionen geringfügig größer als die der Pizzatasche sind und so der Führung zum Einschieben desselben dient.

3. Aufwärmvorrichtung nach Anspruch 1 oder 2, **dadurch gekennzeichnet, daß** sie wenigstens zwei externe Heizelemente (15) umfaßt, welche einander gegenüberliegend beidseitig vom Heizspieß (13) angeordnet sind.

4. Aufwärmvorrichtung nach Anspruch 3, **dadurch gekennzeichnet, daß** die Heizelemente (15) eine längliche Form besitzen und sich spürbar parallel zum Heizspieß (13) und gemäß einer Längsrichtung entsprechend oder nahe des aufzuheizenden Produkts (11) erstrecken.

5. Aufwärmvorrichtung nach einem der vorhergehenden Ansprüche, **dadurch gekennzeichnet, daß** der Heizspieß (13) ein spitz zulaufendes Ende (23b) besitzt, welches das Aufschieben des Produkts (11) auf denselben begünstigt.

6. Aufwärmvorrichtung nach einem der vorhergehenden Ansprüche, **dadurch gekennzeichnet, daß** der Heizspieß (13) eine geringe Dicke besitzt und eine ebene, längliche Konformation in Form einer scharfen Schneidklinge (23) darstellt.

7. Aufwärmvorrichtung nach einem der vorhergehenden Ansprüche, **dadurch gekennzeichnet, daß** der Heizspieß (13) aus einem wärmeleitfähigen Material besteht, welches mit den Lebensmittelmaterialien der aufzuwärmenden Produkte verträglich ist, z. B. aus lebensmitteltauglichem Aluminium oder aus "Inox".

8. Aufwärmvorrichtung nach einem der vorhergehenden Ansprüche, **dadurch gekennzeichnet, daß** der Heizspieß (13) mit einem nicht an den Lebensmittelmaterialien haftenden Material beschichtet ist, z. B. des Typs "Teflon".

9. Aufwärmvorrichtung nach einem der vorhergehenden Ansprüche, **dadurch gekennzeichnet, daß** die äußeren Heizelemente (15) von der Art einer Widerstandsheizung (25) oder eines Infrarotstrahlers sind, versehen mit einem Reflektionsschild (27), wobei diese gemeinsam die Hitze auf das Produkt lenken.

10. Aufwärmvorrichtung nach einem der vorhergehenden Ansprüche, **dadurch gekennzeichnet, daß** es diese mit einem Auswurfelement (17) für das Produkt ausgerüstet ist, welches am Ende des Aufwärmens auf manuelle oder automatische Weise betätigt wird und ein Entfernen des Produkts von dem Heizspieß (13) und somit aus der Vorrichtung sicherstellt.

11. Aufwärmvorrichtung nach Anspruch 10, **dadurch gekennzeichnet, daß** das Auswurfelement (17) mit einem Abstreifelement des Heizspießes (13) zur Entfernung des Produkts (11) verbunden ist, wobei der Aufbau aus einer das Produkt tragenden Bodenplatte (39) gebildet ist, welche in Richtung des Heizstabes beweglich und mit einer spaltförmigen Öffnung (43) versehen ist, und dieselbe im wesentlichen die Form des Querschnitts des Heizspießes (13) aufweist, welche zum Abkratzen des Heizspießes (13) während der Verschiebung zur Entfernung des Produkts geeignet ist.

12. Aufwärmvorrichtung nach einem der vorhergehenden Ansprüche, **dadurch gekennzeichnet, daß** die Dauer des Erwärmens zum Erhalt einer Temperatur von etwa 50°C im Inneren des Produkts (11) und von etwa 40°C an dessen Oberfläche am Ende des Betriebs vorgesehen ist, welches ein manuelles Ergreifen desselben und gleichzeitigen Konsum erlaubt, wobei die Dauer des Erwärmens herabgesetzt ist, in der Größenordnung einer Minute.

13. Automatische Verteilvorrichtung für Lebensmittelprodukte von der Art von Broten und insbesondere von der Art von Pizzataschen unter Verwendung einer Aufwärmvorrichtung wie in einem der Ansprüche 1 bis 12 definiert, **dadurch gekennzeichnet, daß** sie ein Lager (51) für verschiedene Lebensmittelprodukte (53) umfaßt, welche kalt konserviert sind, eine Aufwärmvorrichtung (55) mit einem beheizten Korb (65) und einem zentralen Heizspieß (69), welcher in das Produkt eingeführt und unter Abstreifen von demselben gelöst wird, sobald das aufgewärmte Produkt eine gewünschte Temperatur besitzt, und eine Verpackungs- und Verteileinrichtung (57) für das aufgewärmte Produkt aufweist.
